# FASCICULE DE BREVET EUROPEEN

(11) **EP 3 194 763 B1**
(45) Date de publication et mention de la délivrance du brevet: **10.10.2018**
(21) Numéro de dépôt: 15766922.7
(22) Date de dépôt: 04.09.2015
(51) Int. Cl.: F03B 13/22, B63B 39/03, B63H 19/02, B63J 3/00

(54) **PRODUCTION D'ENERGIE SUR UNE STRUCTURE SOUMISE A LA HOULE**
ENERGIEERZEUGUNG AUF EINER STRUKTUR UNTER WELLENGANG
ENERGY GENERATION ON A STRUCTURE SUBJECT TO SWELL

(30) Priorité: 18.09.2014 FR 1458824
(43) Date de publication de la demande: 26.07.2017
(73) Titulaire: Geps Techno, 44600 Saint-Nazaire (FR)
(72) Inventeur: LONGEROCHE, Jean-Luc, F-44600 Saint-Nazaire (FR); MAGALDI, Philippe, F-44600 Saint-nazaire (FR)
(74) Mandataire: Pichat, Thierry
(86) Numéro de dépôt international: PCT/FR2015/052357
(87) Numéro de publication internationale: WO 2016/042236

(56) Documents cités:
- EP-A1- 0 059 652
- WO-A2-2009/096796
- FR-A2- 2 499 161
- JP-A- 2011 157 907
- US-A- 2 258 464
- US-A- 4 009 396

## Description

L'invention se rapporte à un dispositif de production d'énergie sur une structure adaptée à subir au moins un mouvement alternatif d'inclinaison d'un premier bord sur un deuxième bord opposé.

Dans ce domaine, et sur un navire de surface, il a déjà été proposé dans EP0059652 un tel dispositif comprenant :
- au moins une première et une deuxième turbines disposées respectivement vers les premier et deuxième bords,
- au moins une chambre intermédiaire qui s'étend entre les première et deuxième turbines,
- des premier et deuxième bassins latéraux contenant chacun l'une des première et deuxième turbines et communiquant avec la chambre intermédiaire pour assurer des entrées et sorties de liquide, les bassins latéraux comprenant chacun une paroi qui les délimite extérieurement et étant situés vers deux extrémités de la chambre intermédiaire, respectivement vers les premier et deuxième bords de préférence.

Afin de surmonter au moins en partie des problèmes persistants de perte de charge, de rendement et/ou de construction relativement complexes, il est ici proposé:
- que les première et deuxième turbines soient à axes verticaux, le dispositif étant considéré à l'horizontal,
- et que les premier et deuxième bassins latéraux et les première et deuxième turbines soient disposés sensiblement dans l'alignement de la direction d'allongement de la chambre intermédiaire, de manière que le liquide soit reçu sensiblement dans cet alignement.

Ainsi il y aura, vers les premier et deuxième bords, une disposition des turbines dans une structure qui reçoit le liquide sensiblement dans le prolongement de la direction d'allongement de la chambre intermédiaire, évitant ainsi un coude, ou un changement notable de direction du fluide d'alimentation des turbines juste avant que les turbines le reçoivent, ce qui est générateur de perte de charge.

Dispositif supposé à l'horizontale, les bassins latéraux et les turbines seront sensiblement dans le prolongement horizontal de la direction d'allongement de la chambre intermédiaire.

Dans une première réalisation, il est prévu de favoriser l'implantation du dispositif sur des structures équipées d'un amortisseur d'oscillations soit jugé non suffisamment performant, soit auquel on souhaite adjoindre un module de production d'énergie électrique.

Il est alors proposé, de préférence (bien que la solution ci-après ne soit pas exclue) :
- qu'en séparation avec la chambre intermédiaire, la paroi (de délimitation extérieure) de chaque bassin latéral présente un venturi,
- voire, de préférence, que les première et deuxième turbines soient à sens de rotation unique et à pales à faces opposées respectivement concaves et convexes, face au flux dudit liquide.

Le venturi accélèrera le flux, à l'entrée dans le bassin latéral, ce qui sera d'autant plus utile pour la production d'énergie si la turbine est placée sensiblement entre les lèvres du venturi.

Et avec des turbines pourvues de telles pales, on pourra installer des turbines quasi identiques à des turbines SAVONIUS.

En pratique, un amortisseur d'oscillations comportant latéralement des volets mobiles ou fixes, la solution ci-dessus pourra permettre d'avoir « juste » à remplacer les volets par les venturis et, favorablement, concernant les turbines, d'avoir « juste » à les placer des endroits judicieux et/ou à choisir les bons modèles.

Notamment sur des structures non équipées d'amortisseur d'oscillations, on pourra proposer une autre solution où chaque bassin latéral comprendra alors:
- une partie supérieure dans laquelle sera disposée l'une des première et deuxième turbines, de manière que ladite partie supérieure reçoive le liquide sensiblement dans l'alignement de la direction d'allongement de la chambre intermédiaire qui l'alimente,
- et une partie inférieure qui communiquera avec la partie supérieure, chacune des parties supérieure et inférieure communiquant avec la (les) chambre(s) intermédiaire(s) pour les entrées et sorties de liquide.

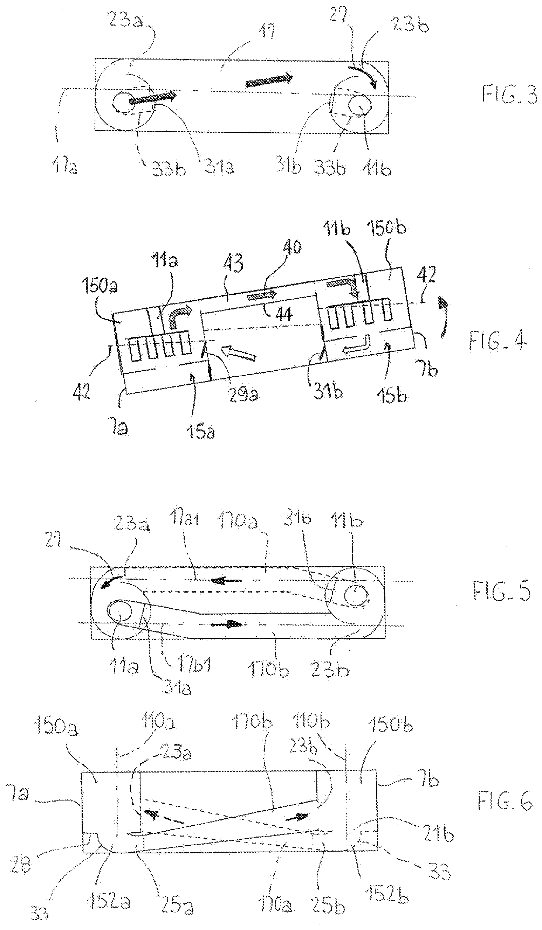

Ci-après (en liaison avec les figures 5,6), une solution en conduite forcée au moins à l'entrée est proposée, avec deux canalisations (170a,170b) de circulation du fluide sous conduite forcée, entre les bassins latéraux 15a,15b. Ceci favorise un approvisionnement des turbines, que l'on force donc.

Toutefois, utiliser une chambre intermédiaire (partiellement) remplie d'un liquide à surface libre permettra a priori de profiter de la technologie d'amortissement de roulis dite « FLUME », dans sa composante G-SIRE ou I-SIRE.

En vue à nouveau de favoriser une alimentation en liquide performante, qui pâtisse le moins possible des rythmes du mouvement en cause, parfois perturbés par le vent ou un état de houle, il est par ailleurs proposé que soit prévue (au moins) une cloison dressée entre les première et deuxième turbines, dans la chambre intermédiaire, qu'elle sépare ainsi en un premier et un deuxième conduits de circulation dudit liquide entre les turbines, chaque bassin latéral communiquant avec les deux conduits:
- pour une entrée dudit liquide dans le bassin, par un premier passage à travers la paroi du bassin, dans sa partie supérieure, et
- pour la sortie dudit liquide du bassin, par un second passage à travers la paroi du bassin, dans sa partie inférieure.

Pour limiter les interférences de flux entre celui dans un sens et celui en sens inverse, il pourra être préféré que les communications entre les parties inférieures des bassins latéraux et la chambre intermédiaire soient pourvues de clapets anti-retour.

Equiper de tels clapets ces communications pourra avoir d'autant plus de sens qu'une cloison intermédiaire comme précitée n'existera pas, dès lors qu'alors toutes les communications entre les parties supérieure et inférieure des bassins latéraux et la chambre intermédiaire déboucheront dans une chambre non compartimentée, rendant alors importantes les possibles interférences de flux entre les masses de liquide en mouvement.

Aspect qui peut aussi avoir son importance : gaver en liquide de manière optimisée la (chaque) turbine qui reçoit la masse de liquide flux issue du basculement dans un sens (par exemple roulis du premier bord sur le deuxième).

A cette fin, il est conseillé que les parties supérieure et inférieure de chaque bassin latéral communiquent entre elles par un goulot.

Prédéfinir la section de passage de ce goulot en fonction du volume du bassin latéral concerné, du volume d'eau en circulation lui parvenant, des conditions moyennes estimées du mouvement alternatif d'inclinaison censé s'appliquer et de la turbine considérée permettra certainement d'atteindre un fonctionnement moyen performant.

Toutefois, pour réguler de façon plus fine l'alimentation en liquide de la partie supérieure de chaque bassin latéral, il est proposé de faire varier la section de passage du goulot, de préférence en fonction du rendement constaté de la turbine considérée.

Utiliser à cette fin un diaphragme déformable permettra d'atteindre cet objectif, de façon simple et fiable.

Concernant les turbines, s'il y a donc des bassins latéraux à parties supérieure et inférieure, il pourra s'agir de roues à aubes présentant un axe vertical, structure au repos. Des turbines à réaction sont conseillées. Favorablement, il s'agira de turbines assez proche du type « Francis » où le liquide moteur arrive sur le pourtour de la roue et pousse les aubes, le liquide moteur s'écoulant ensuite par le canal de fuite situé sous la turbine.

En liaison avec cela, il est d'ailleurs conseillé que chaque communication entre la partie supérieure bassin du latéral correspondant et la chambre intermédiaire soit située de sorte que le liquide canalisé par la chambre intermédiaire vers l'une des première et deuxième turbines entre essentiellement tangentiellement dans ledit bassin latéral et atteigne ainsi la turbine correspondante qui y est disposée.

Une telle disposition est mieux adaptée à la présente situation que les turbines à hélices et à axes horizontaux de EP0059652 (figures 8 et 9).

Un autre problème concerne l'évacuation du liquide par le canal situé sous la turbine.

Pour favoriser cet écoulement qui conditionne aussi le rendement de la turbine, on conseille que la partie inférieure de chaque bassin latéral comprenne un diffuseur incurvé situé sensiblement sous le goulot et qui oriente le liquide vers la communication correspondante de sortie de liquide depuis cette partie inférieure vers la chambre intermédiaire.

Ceci limitera les pertes de charges et les turbulences néfastes à un circulation/évacuation rapide du liquide.

Et pour favoriser le rendement, il est aussi proposé d'adjoindre un circuit additionnel de fluide gazeux reliant les premier et un deuxième bassins latéraux. Si la chambre intermédiaire présente une surface libre, il n'y a pas de communication entre le circuit additionnel et le gaz présent au-dessus de cette surface libre.

Le basculement du dispositif entrainera une accumulation d'eau d'un côté, avec transfert du fluide gazeux en sens inverse. Ce transfert du fluide gazeux agira pour créer une surpression sur le liquide se vidant du côté du bord qui monte, ceci avant ou sans clapet.

Outre le dispositif qui vient d'être présenté, est en outre concerné un procédé de production d'énergie sur une structure subissant au moins un mouvement d'inclinaison d'un bord sur le bord opposé, caractérisé en ce qu'à bord de la structure, dans au moins une chambre intermédiaire allongée qui est centrée suivant une direction d'allongement, on fait circuler un liquide pour l'amener vers une première et une seconde turbines disposées respectivement vers l'un et l'autre desdits bords, dans des premier et deuxième bassins latéraux, et qu'on alimente par des canaux d'entrée respectivement situés sensiblement dans l'alignement de la direction d'allongement de la chambre intermédiaire.

Est aussi concernée une structure pouvant osciller autour d'un axe horizontal et comprenant le dispositif de production d'énergie ci-avant présenté, dans tout ou partie de ses caractéristiques, ou sur lequel est produite une énergie électrique selon le procédé ci-dessus.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en perspective avec arrachement d'une partie de poupe d'un navire équipé d'un premier mode de réalisation d'un dispositif de production d'énergie imaginé;
- la figure 2 est une vue sensiblement de dessous, basculée, d'une des bassins latéraux de la figure 1, avec sa turbine ;
- la figure 3 schématise de dessus la solution générale précédente ;
- la figure 4 schématise de côté une solution avec un circuit additionnel de fluide gazeux ;
- les figures 5,6 schématise une autre variante à deux canalisations, de dessus puis de côté ;
- les figures 7 (côté) et 8,9 (dessus) schématisent encore une autre variante à paroi intermédiaire axiale (figure 8) ou inclinée angulairement (figure 9), et
- les figures 10, 11 schématisent en coupe médiane vertical suivant X-X, puis de dessus un autre mode de réalisation,
- et les figures 12,13 schématisent, de dessus puis de côté, un autre mode de réalisation, ici à l'endroit d'un des bassins latéraux.

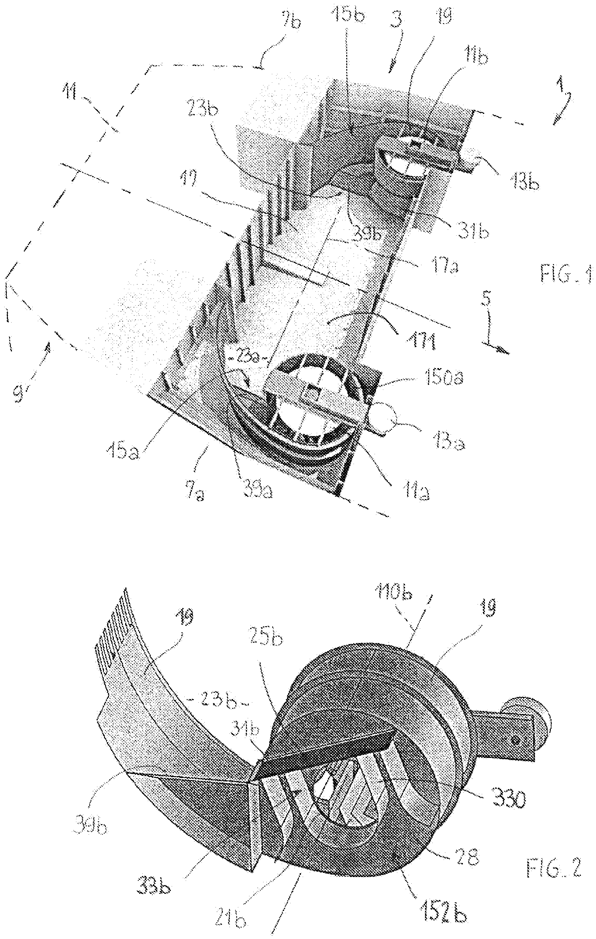

La figure 1 schématise donc (une zone de la partie arrière d')un navire de surface 1 équipé d'un dispositif 3 de production d'énergie électrique.

Ce navire adapté pour avancer ici dans la direction 5 est un exemple de structure adaptée à subir au moins un mouvement oscillant d'un premier bord 7a sur un deuxième bord opposé 7b, typiquement sous l'effet des vagues et/ou de la houle. Une forme autre de structure pourrait convenir.

Le navire 1 comprend une coque 9 et un pont 11.

Sur cette structure, le dispositif 3 comprend une première et une deuxième turbines 11a,11b disposées respectivement vers les premier et deuxième bords. Chaque turbine est couplée à un alternateur 13a,13b propre à fonctionner en génératrice. De préférence, les turbines seront montées pour tourner toujours dans un sens et le même sens.

Le dispositif 3 comprend également un premier et un deuxième bassins latéraux 15a,15b contenant chacun l'une des première et deuxième turbines et communiquant avec une chambre intermédiaire 17. Ces bassins latéraux sont situés vers deux extrémités de la chambre intermédiaire, respectivement vers les premier et deuxième bords 7a,7b. Ils comprennent chacun une paroi périphérique 19 qui les délimitent extérieurement.

Les bassins et la chambre sont à fond plan, commun, 171.

La chambre intermédiaire 17 est partiellement remplie d'un liquide 18 à surface libre, qui peut être de l'eau, du carburant tel fuel ou gas-oil ou un liquide plus dense, pour profiter d'un effet d'inertie. La chambre intermédiaire 17 est allongée dans une direction 17a, sensiblement horizontale sur les illustrations, structure au repos, entre les première et deuxième turbines. Dans ce cas, les bassins latéraux sont aussi à surface libre, de préférence.

Dans ce mode réalisation, et de préférence en liaison également avec les réalisations des figures 3 à 9, chaque bassin latéral comprend (voir figures 1,6,7 notamment), pour favoriser rendement, praticité de construction et compacité :
- une partie supérieure 150a,150b dans laquelle est disposée l'une des première et deuxième turbines 11a,11b,
- et une partie inférieure 152a,152b qui communique, en 21a,21b, avec la partie supérieure, chacune des parties supérieure et inférieure communiquant, respectivement en 23a,23b et 25a,25b avec la chambre intermédiaire17, pour les entrées et sorties de liquide.

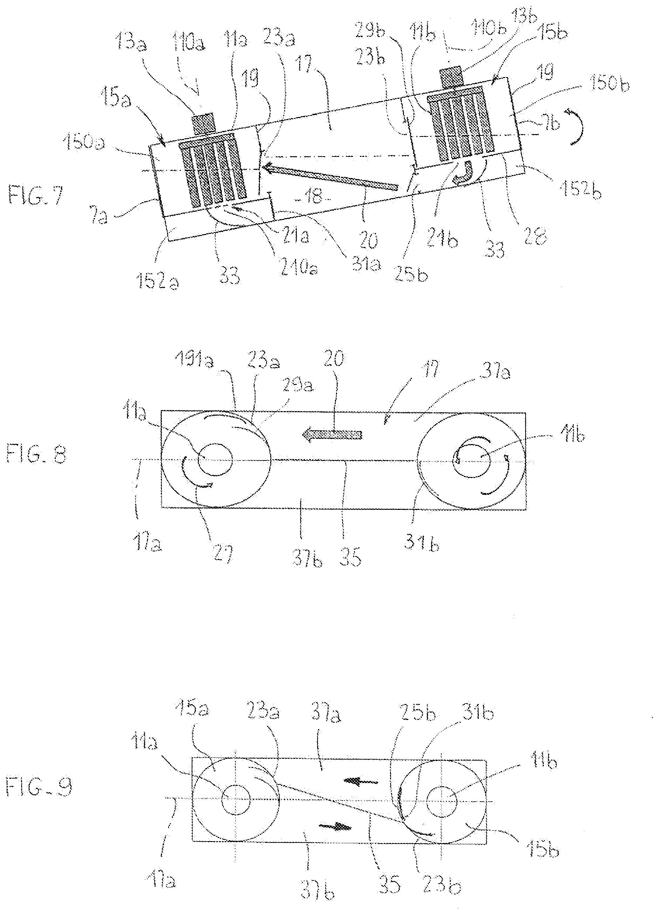

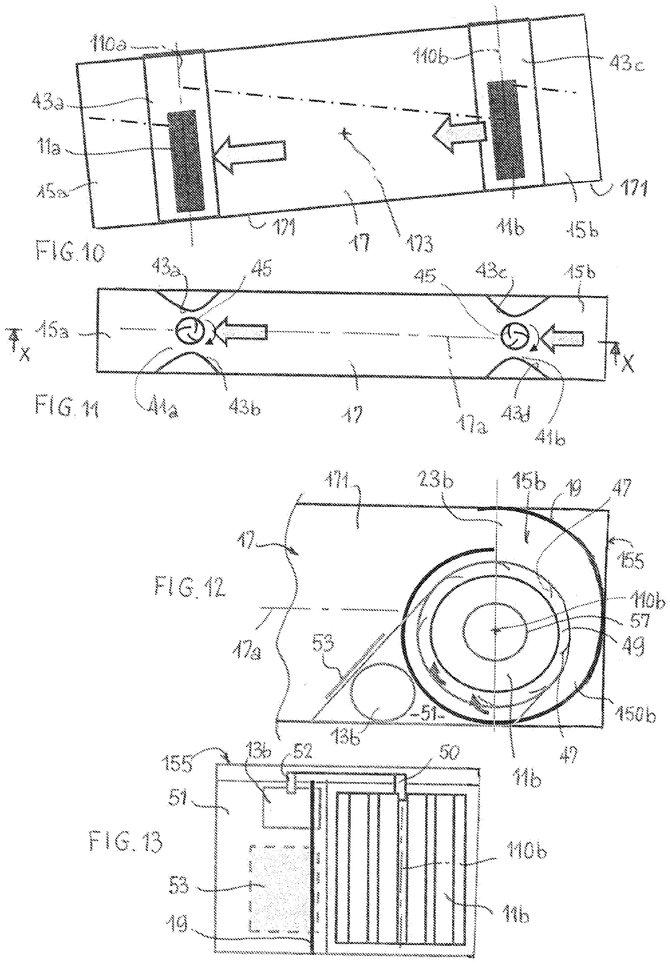

Chacune des première et deuxième turbines 11a,11b est disposée dans la partie supérieure 150a,150b (qui lui correspond) de telle sorte que cette dernière reçoive le liquide 18 (voir niveau indiqué figure 7 notamment en traits mixtes) sensiblement dans l'alignement de la direction d'allongement 17a de la chambre intermédiaire ; voir figures 1,3,7,8 ; flèche 20. En pratique, il est conseillé comme figure 1 que les canaux d'entrée 23a,23b soient respectivement situés sensiblement dans l'alignement, ou prolongement axial, de la direction (axe) d'allongement 17a de la chambre intermédiaire. L'axe (173 notamment figure 10), horizontal, autour duquel la structure 1 oscille est parallèle à la direction 17a. L'alimentation de la turbine se fera alors sensiblement tangentiellement, ici via une spirale.

Ainsi, comme illustré, chaque communication entre la partie supérieure 150a ou 150b du bassin latéral correspondant et la chambre intermédiaire 17 concernée va pouvoir être située de sorte que le liquide canalisé par la chambre intermédiaire vers l'une des première et deuxième turbines 11a,11b pénètre essentiellement tangentiellement et en périphérie dans ledit bassin latéral (flèche 27 figures 3,5,8 pour l'un des bassins) et atteigne ainsi la turbine correspondante.

Les communications 23a,23b et 25a,25b seront définies de préférence par des ouvertures ou passages (identiquement numérotés) dans chaque paroi 19, au niveau des turbines pour les parties supérieures et sous le niveau de ces turbines (la structure 1 étant supposée alors à l'horizontale), pour les parties inférieures. Comme illustré, on pourra préférer, pour le rendement, que les communications hautes 23a,23b soient décalées latéralement vers l'extérieur et donc situées plus près de la paroi latérale considérée de la chambre intermédiaire 17, telle celle 191a que borde presque l'ouverture ou communication haute 23a sur la figure 8, tandis que les communications basses 25a,25b seraient décalées latéralement vers l'intérieur et donc situées plus près de l'axe 17a, pour se rapprocher latéralement de la position ici axiale/centrée de la communication concernée (21b sur la figure 7) entre les parties supérieure et inférieure en cause, ici 150b et 152b.

Les communications 21a,21b seront chacune définies dans une paroi pleine 28 séparant les parties supérieure et inférieure en cause, respectivement 150a,150b,152a,152b.

En liaison avec cette alimentation par le haut, de préférence tangentielle, de chaque turbine, couplée à une évacuation par en-dessous, chaque première et deuxième turbines 11a,11b sera favorablement une turbine, à aubes dans l'exemple, présentant un axe vertical, respectivement 110a,110b, structure 1 au repos.

En pratique, il est par ailleurs conseillé que les communications 21a,21b définissent chacune un goulot entre les parties supérieure et inférieure de chaque bassin latéral.

Certes chaque goulot 21a,21b pourra présenter une section prédéterminée, arrêtée pour une condition de fonctionnement moyenne. On peut toutefois prévoir qu'il comprenne un diaphragme déformable, tel celui 210a du goulot 21a figure 7. Ainsi, chaque goulot pourra être défini par une membrane ou plaque dont on utilisera la déformation élastique ou commandé par un mécanisme pour connaître ou adapter à cet endroit le mouvement du fluide s'écoulant de la turbine concernée. En faisant ainsi varier la section de passage du goulot concerné, on favorisera une régulation de l'alimentation en liquide de la partie supérieure de chaque bassin latéral 15a,15b. Utiliser une poche annulaire gonflable, par un fluide gazeux, et dégonflable ou pouvant être plus ou moins remplie sous pression d'un fluide est envisageable.

Pour là encore limiter les pertes de charge, les premier et deuxième bassins latéraux 15a,15b pourront être cylindriques ou hémicylindriques, ou encore plus favorable enroulé en escargot (figures 1,2,3,5), d'axe vertical, structure porteuse 1 au repos.

Si la présence des clapets anti-retour 29a,29b à l'endroit des communications entre les parties supérieures des bassins latéraux et la chambre intermédiaire 17 sera de préférence optionnelle, il sera a priori utile d'en disposer (voir 31a,31b) à l'endroit des communications basses 25a,25b entre les parties inférieures des bassins latéraux et la chambre intermédiaire. On aura compris que tout clapet anti-retour s'ouvrira dans le sens du flux de liquide principal (quand la structure s'incline dans un sens) et se fermera en sens inverse, pour éviter, ou limiter, le reflux si tout le liquide ne s'est pas écoulé à l'écart de cette zone entre temps. En pratique il s'agira de préférence de volets à basculement libre.

Dans la solution des figures 1-3 il n'y a pas de séparation dans la chambre intermédiaire entre les communications avec les parties inférieures 152a ou 152b et celles avec les parties supérieures 150a,150b. A l'entrée des enroulements en spirale, on note juste les rampes de biais 39a,39b qui élèvent l'admission de liquide jusqu'au niveau des parties supérieures 150a,150b. Les clapets anti-retour 31a,31b sont à leur niveau.

Pour favoriser le caractère non nécessaire des clapets anti-retour hauts 29a,29b, on pourra en particulier prévoir que la partie inférieure 152a,152b de chaque bassin latéral comprenne un diffuseur 33 situé sensiblement sous le goulot et qui orientera le liquide vers la communication correspondante, 25a ou 25b, de sortie de liquide depuis cette partie inférieure vers la chambre intermédiaire 17.

Dans ce qui précède la chambre intermédiaire 17 est un caisson fermé (hormis ses communications 23,23b,25a,25b avec les parties supérieure et inférieure 150a,150b,152a,152b des bassins latéraux) non subdivisé intérieurement. En outre, on conseille de n'y placer aucun obstacle transversal à la libre circulation du liquide de travail, à la différence de ce que prévoit la solution « FLUME ».

On pourra toutefois considérer comme utile, pour canaliser les flux de liquide dans un sens et en sens inverse, lors des basculements de la structure 1, de prévoir une cloison 35 intermédiaire dressée entre les première et deuxième turbines 11a,11b, dans la chambre intermédiaire 17. La cloison 35, séparera alors la chambre intermédiaire en un premier et un deuxième conduits 37a,37b de circulation du liquide entre les turbines.

Chaque bassin latéral communiquera alors avec les deux conduits 37a,37b:
- pour une entrée de liquide dans le bassin latéral considéré, tel 15a, par un premier passage 23a (ou 23b pour l'autre bassin, 15b) à travers la paroi transversale 19 du bassin, dans sa partie supérieure, et
- pour la sortie dudit liquide du bassin, par un second passage et 25a ou 25b à travers la même paroi transversale du bassin, dans sa partie inférieure.

Longitudinale, la cloison intermédiaire 35 pourra être (comme illustré figure 8) ou ne pas être (figure 9) parallèle à l'axe 17a, ici médian, de la chambre intermédiaire, de façon à ne favoriser les flux ni dans un sens ni dans l'autre, ni les accélérer ou ralentir. Dans certaines circonstances, ceci pourrait toutefois s'avérer utile. Figure 9, la cloison intermédiaire 35, qui se dresse de biais, est orientée de façon à former, dans les deux sens, un goulet vers l'entrée dans les parties supérieures 150a,150b. On a ainsi un convergent depuis les sorties inférieures 25a,25b vers les entrées supérieures 23a,23b.

Et pour guider encore davantage les flux de fluide, au fur et à mesure des oscillations de la structure flottante 1, on recommandera même alors que :
- le premier passage 23a à travers la paroi du premier bassin latéral 15a communique avec le premier conduit 37a uniquement, tandis que le second passage 25a à travers la paroi de ce même premier bassin latéral communique avec le deuxième conduit 37b, uniquement, et
- le premier passage à travers la paroi 23b du deuxième bassin latéral 15b communique avec le deuxième conduit 37b uniquement, tandis que le second passage 25b à travers la paroi de ce même deuxième bassin latéral communique avec le premier conduit 37a, uniquement.

Quelle que soit la solution retenue, avec ou sans cloison séparatrice, on pourra prévoir que la chambre intermédiaire 17 soit allongée dans une direction générale transversale à l'axe longitudinal d'avance, ici la direction 5, de la structure. L'encombrement sera plus limité que perpendiculairement et on pourra alors contrôler le roulis sans risque pour la conduite du navire si la fréquence de circulation du fluide dans le dispositif précité s'avérait momentanément perturber le tangage. Dans le cas d'une structure mouillée, donc sans vitesse d'avance, la chambre intermédiaire pourra être dans l'axe de la structure pour récupérer l'énergie du tangage.

Comme déjà mentionné, tout ou partie des caractéristiques qui précèdent permettront, sur donc une structure flottante 1 subissant au moins un mouvement alternatif d'inclinaison d'un bord sur le bord opposé, de produire de l'énergie électrique, en faisant circuler, dans une chambre intermédiaire 17 (ou une chambre en plusieurs parties telles 37a,37b, ou plusieurs chambres 170a,170b figures 5,6), un liquide, afin de l'amener alternativement vers une première et une seconde turbines 11a,11b situées respectivement de préférence vers l'un et l'autre desdits bords 7a,7b, ces turbines 11a,11b étant donc alimentées par des canaux d'entrée 23a,23b respectivement situés de préférence sensiblement dans l'alignement de (donc sensiblement centrée sur) la direction d'allongement (axe 17a, ou respectivement 17a1,17b1 figure 5) de la chambre intermédiaire (celle considérée s'il y en a plusieurs).

Dans cet espace 17, le liquide pourra circuler en décalage de phase avec le mouvement à contrôler de la structure. Toutefois, par exemple dans le cas du M-SIRE, on pourrait prévoir un mouvement en phase par exemple avec le roulis du navire. Dans ce cas le dispositif 3 n'aurait pas d'effet d'amortisseur sur le mouvement du navire, voire un effet amplificateur, ce qui ne serait pas néfaste si le dispositif 3 est de faible dimensions par rapport à celles du navire.

Figures 1,2,3,5, on voit encore une variante qui se distingue en ce que chaque paroi 19 qui délimite extérieurement le bassin latéral 15a,15b correspondant est enroulée sensiblement en spirale autour de la turbine 11a,11b correspondante. L'entrée tangentielle 23a,23b dans les parties supérieures 150a,150b va donc en se rétrécissant au moins jusqu'à ce qu'on atteigne une partie de paroi 19 en secteur de cylindre de section circulaire. Comme précédemment, le fluide de travail arrive tangentiellement, est ensuite entraîné vers le centre, radialement à l'axe 151a,151b de la turbine concernée et en ressort sensiblement axialement, par en dessous, dans la partie inférieure 152a ou 152b. Sans cloison intermédiaire, ni double chambres (figures 5,6), les deux spirales sont disposées suivant une symétrie axiale (dans l'exemple l'axe longitudinal du navire, figures 1,2,3).

Figure 4, un circuit additionnel de fluide gazeux est prévu et fonctionne comme suit : Les volume de fluide gazeux (tel de l'air) dans les parties supérieures 150a,150b des bassins latéraux, au-dessus du niveau 42 de liquide de travail dans ces bassins, sont mis en communication par un conduit 43 qui s'étend entre eux, le long de la chambre intermédiaire 17 dont il est séparé par une cloison 44. Quand, à un temps de basculement, l'un des bassins latéraux (15a par exemple) descend et se remplit de liquide de travail (dans l'exemple par ouverture naturelle des clapets 31b,29a), la hausse du niveau de liquide dans la partie supérieure 150a comprime le fluide gazeux qui le surmonte et qui donc s'échappe par le conduit 43 (flèche 40). Ce fluide atteint alors l'autre partie supérieure 150b où il va contribuer à faire baisser le niveau 42 dans cette partie. Ceci peut fonctionner avec tous les modes de réalisation précédents prévoyant une surface libre dans les bassins latéraux et dans la chambre intermédiaire.

A nouveau figures 5,6, on notera que chaque chambre ou canalisation 170a,170b définira de préférence un divergent depuis la partie inférieure concernée vers le niveau (la partie) supérieure du bassin latéral opposé.

Ainsi, on pourra toujours faire circuler le fluide de travail vers des première et une seconde turbines 11a,11b alimentées par des canaux d'entrée 23a,23b respectivement situés sensiblement dans l'alignement de la direction d'allongement 17a1 (pour 23a),17b1 (pour 23b) de la chambre intermédiaire concernée.

Tel est d'ailleurs encore le cas dans la variante des figures 10,11 qui illustrent un mode de réalisation où les bassins latéraux 15a,15b sont toutefois sans division transversale entre des parties supérieure et inférieure qui n'existent donc plus. Ceci peut permettre une adaptation plus aisée sur des structures déjà équipées de systèmes stabilisateurs standards, à volets latéraux.

Il s'agit là d'une adaptation d'un stabilisateur standard dit "Flume" avec notamment le remplacement desdits volets par des venturis.

Ainsi, à l'entrée des bassins latéraux 15a,15b, de part et d'autre de la chambre intermédiaire 17, parallèlement à sa direction d'allongement 17a, trouve-t-on un venturi 41a,41b. Dispositif supposé à l'horizontale (au repos), chaque venturi est défini par un convergent-divergent vertical formé chacun par deux parois convexes 43a,43b et 43c,43d. Deux turbines (11a,11b respectivement) toujours à axes verticaux 110a,110b, sont installées, chacune à l'endroit de l'un des bassins latéraux.

Favorablement, les turbines seront de type Savonius, tournant toujours dans le même sens, quelle que soit la direction du flux (voir flèches).

Les pales 45 de chaque turbine sont concaves sur une face, convexes sur l'autre, face au flux liquide, comme figuré. Elles sont, par turbine, enroulées autour de leur axe de rotation 110a ou 110b.

Le liquide en circulation (large flèche) leur arrive transversalement.

Chaque turbine 11a,11b sera de préférence disposée au col du venturi, comme illustré, pour profiter alors de toute l'accélération créée.

On aura compris le fonctionnement :
- à l'entrée dans chaque bassin latéral 15a,15b, on fera circuler le liquide dans un venturi, parallèlement à ladite direction d'allongement 17a,
- et, lors d'un basculement vers un dit bord puis l'autre, on fera passer le liquide dans les turbines 11a, 11b successivement, dans un premier sens de ladite direction d'allongement, puis en sens inverse, à travers les venturi 41a,41b.

Les figures 12,13 illustrent un mode de réalisation d'un bassin latéral de stabilisateur, ici 15b, équipé d'un module de récupération d'énergie un peu différent.

Le principe de ce module est d'intégrer toutes les fonctions liées à la récupération d'énergie et ce indépendamment des fonctions du stabilisateur dans lequel le module est disposé.

Le module comprend les éléments suivants :
- une structure métallique 155 qui supporte tous les composants,
- des clapets d'injection anti-retour souples 47 disposés dans le cylindre injecteur 49 du module au droit de l'entrée d'injection, ici 23b, ce cylindre est conçu pour optimiser le rendement de l'injection représentée par les flèches, afin d'établir une répartition axisymétrique du débit autour de la turbine,
- la turbine métallique, 11b ici, à axe vertical 110b, disposée, avec son arbre et son palier, 50, en partie supérieure du bassin latéral considéré, ici 150b,
- une transmission du mouvement de la turbine vers la génératrice, ici 13b avec éventuellement une fonction multiplicateur de vitesse de rotation
- un compartiment étanche 51 qui abrite la génératrice avec son arbre et son palier étanche, 52, l'armoire électrique 53 de gestion de puissance et une possible porte 55 d'accès pour intervention
- un diaphragme 57, au centre, au niveau du passage entre les parties supérieure et inférieure du bassin latéral considéré.

## Revendications

1. Dispositif de production d'énergie sur une structure adaptée à subir au moins un mouvement alternatif d'inclinaison d'un premier bord (7a) sur un deuxième bord opposé (7b), le dispositif comprenant :
- au moins une première et une deuxième turbines (11a,11b) disposées respectivement vers les premier et deuxième bords,
- au moins une chambre intermédiaire (17,170a,170b) qui est allongée entre les première et deuxième turbines,
- un premier et un deuxième bassins latéraux (15a,15b) à l'endroit de chacun desquels est disposé l'une des première et deuxième turbines et communiquant avec la (les) chambre(s) intermédiaire(s) pour assurer des entrées et sorties de liquide (18), les bassins latéraux comprenant chacun une paroi (19) qui les délimitent extérieurement et étant situés vers deux extrémités de la chambre intermédiaire,
**caractérisé en ce que** :
- les première et deuxième turbines sont à axes verticaux (110a,110b), le dispositif étant alors considéré à l'horizontal,
- et les premier et deuxième bassins latéraux (15a,15b) et les première et deuxième turbines sont disposés sensiblement dans l'alignement de la direction (17a,17a1,17b1) d'allongement de la chambre intermédiaire, de manière que le liquide soit reçu sensiblement dans cet alignement.

2. Dispositif selon la revendication 1 où, en séparation avec la chambre intermédiaire, la paroi (19) de chaque bassin latéral présente un venturi.

3. Dispositif selon la revendication 2, où les première et deuxième turbines sont à sens de rotation unique et à pales (45) à faces opposées respectivement concaves et convexes, face au flux dudit liquide.

4. Dispositif selon la revendication 1, où chaque bassin latéral comprend:
- une partie supérieure (150a,150b) dans laquelle est disposée l'une des première et deuxième turbines, de manière que ladite partie reçoive le liquide sensiblement dans l'alignement de la direction (17a,17a1,17b1) d'allongement de la chambre intermédiaire qui l'alimente,
- et une partie inférieure (152a,152b) qui communique avec la partie supérieure, chacune des parties supérieure et inférieure communiquant avec la (les) chambre(s) intermédiaire(s) pour les entrées et sorties de liquide.

5. Dispositif selon l'une des revendications précédentes, où la chambre intermédiaire comprend deux canalisations (170a,170b) de circulation sous conduite forcée du fluide, entre les premier et deuxième bassins latéraux (15a,15b).

6. Dispositif selon l'une des revendications 1 à 4,
- où la chambre intermédiaire est partiellement remplie d'un liquide (18) à surface libre,
- et qui comprend une cloison intermédiaire (35) dressée entre les première et deuxième turbines, dans la chambre intermédiaire (17), qu'elle sépare ainsi en un premier et un deuxième conduits (37a,37b) de circulation dudit liquide entre les turbines, chaque bassin latéral communiquant avec les deux conduits:
- pour une entrée dudit liquide dans le bassin, par un premier passage à travers la paroi du bassin, dans sa partie supérieure, et
- pour la sortie dudit liquide du bassin, par un second passage à travers la paroi du bassin, dans sa partie inférieure.

7. Dispositif selon la revendication 4, seule ou en combinaison avec l'une des revendications 5,6, dans lequel chaque communication entre la partie supérieure du bassin latéral correspondant (15a,15b) et la chambre intermédiaire est située de sorte que le liquide canalisé par la chambre intermédiaire (17,170a,170b) entre essentiellement tangentiellement dans ledit bassin latéral et atteint ainsi la turbine correspondante (11a,11b) qui y est disposée.

8. Dispositif selon la revendication 4, seule ou en combinaison avec l'une des revendications 5 à 7, dans lequel les communications entre les parties inférieures (152a,152b) des bassins latéraux et la chambre intermédiaire sont pourvues de clapets anti-retour (31a,31b).

9. Dispositif selon la revendication 4, seule ou en combinaison avec l'une des revendications 5 à 8, dans lequel :
- les parties supérieure et inférieure (150a,150b,152a,152b) de chaque bassin latéral communiquent entre elles par un goulot (3,3b), lequel comprend de préférence un diaphragme déformable, et/ou :
- les parties supérieure et inférieure (150a,150b,152a,152b) de chaque bassin latéral communiquent entre elles par un goulot (21a,21b) sensiblement sous lequel est situé un diffuseur (33,33b) qui, dans ladite partie inférieure, comprend une paroi latérale de guidage du flux ayant une ouverture dirigée vers la communication correspondante de sortie de liquide depuis cette partie inférieure vers la chambre intermédiaire.

10. Dispositif selon l'une des revendications précédentes, dans lequel un circuit additionnel de fluide gazeux (40) relie les premier et un deuxième bassins latéraux (15a,15b).

11. Dispositif selon la revendication 4, seule ou en combinaison avec l'une des revendications 5 à 10, dans lequel chaque paroi (19) qui délimite extérieurement le bassin latéral correspondant est enroulée sensiblement en spirale autour de la turbine correspondante.

12. Procédé de production d'énergie sur une structure subissant au moins un mouvement d'inclinaison d'un bord sur le bord opposé, **caractérisé en ce qu'**à bord de la structure, dans au moins une chambre intermédiaire allongée (17,170a,170b), centrée suivant une direction d'allongement, on fait circuler un liquide pour l'amener vers une première et une seconde turbines (11a,11b), chacune à axe vertical structure au repos, disposées respectivement vers l'un et l'autre desdits bords (7a,7b), dans des premier et deuxième bassins latéraux (15a,15b), et qu'on alimente par des canaux d'entrée (23a,23b) respectivement situés sensiblement dans l'alignement de la direction (17a,17a1,17b1) d'allongement de la chambre intermédiaire.

13. Procédé selon la revendication 12, dans lequel :
- on fait fonctionner chaque turbine dans une partie supérieure d'un desdits bassins latéraux (15a,15b) situé vers une des extrémités que la chambre intermédiaire présente suivant sa direction d'allongement,
- et, on fait s'évacuer le liquide contenu dans ladite partie supérieure à travers un goulot (21a,21b) séparant cette partie supérieure d'une partie inférieure (152a,152b) dudit bassin latéral par où on fait transiter le liquide (18) sous la turbine, avant que ledit mouvement de la structure entraîne le liquide vers l'autre turbine.

14. Procédé selon la revendication 12, dans lequel :
- à l'entrée dans chaque bassin latéral (15a,15b) on fait circuler le liquide dans un venturi (41a,41b), parallèlement à ladite direction d'allongement,
- et, lors d'un basculement vers un dit bord puis l'autre, on fait passer le liquide dans les turbines, dans un premier sens de ladite direction d'allongement, puis en sens inverse, à travers les venturi.

15. Structure (1) pouvant osciller autour d'un axe horizontal et comprenant le dispositif (3) de production d'énergie selon l'une des revendications 1 à 11, ou sur lequel est produite une énergie électrique selon le procédé de l'une des revendications 12 à 14.

## Patentansprüche

1. Energieerzeugungsvorrichtung auf einer Struktur, die dazu geeignet ist, mindestens einer schwenkenden Hin- und Herbewegung von einem ersten Rand (7a) zu einem zweiten gegenüberliegenden Rand (7b) ausgesetzt zu werden, wobei die Vorrichtung folgendes umfasst:
- mindestens eine erste und eine zweite Turbine (11a, 11b), die jeweils in Richtung des ersten und des zweiten Rands angeordnet sind,
- mindestens eine Zwischenkammer (17, 170a, 170b, die entlang der ersten und zweiten Turbine verläuft,
- ein erstes und ein zweites seitliches Becken (15a, 15b), an deren Vorderseite die erste oder zweite Turbine angeordnet ist, wobei diese mit der (den) Zwischenkammer(n) verbunden ist, um das Ein-und Auslass von Flüssigkeit (18) zu gewährleisten, wobei die seitlichen Becken jeweils eine Wand (19) umfassen, die sie nach außen hin abgrenzt und die sich zu beiden Enden der Zwischenkammer hin befindet,
**dadurch gekennzeichnet, dass**:
- die erste und die zweite Turbine vertikale Achsen (110a, 110b) aufweisen, wobei die Vorrichtung horizontal ist,
- und das erste und das zweite seitliche Becken (15a, 15b) und die erste und die zweite Turbine im Wesentlichen in der Längsrichtung (17a, 17a1, 17b1) der Zwischenkammer angeordnet sind, sodass die Flüssigkeit im Wesentlichen in dieser Ausrichtung aufgenommen wird.

2. Vorrichtung nach Anspruch 1, in welcher die Wand (19) jedes seitlichen Beckens als Abtrennung zur Zwischenkammer eine Venturivorrichtung aufweist.

3. Vorrichtung nach Anspruch 2, in der die erste und die zweite Turbine in gleicher Drehrichtung laufen und sich deren gegenüberliegende Schaufeln (45) jeweils konkav und konvex Seiten zur Flüssigkeit verhalten.

4. Vorrichtung nach Anspruch 1, in der jedes seitliche Becken folgendes umfasst:
- einen oberen Bereich (150a, 150b), in welchem die erste oder die zweite Turbine so angeordnet ist, dass besagter Bereich die Flüssigkeit im Wesentlichen in Längsrichtung (17a, 17a1, 17b1) der zuführenden Zwischenkammer erhält,
- und einen unteren Bereich (152a, 152b), der mit dem oberen Bereich verbunden ist, wobei der obere und der untere Bereich mit der (den) Zwischenkammer(n) zwecks Ein- und Auslass der Flüssigkeit verbunden sind.

5. Vorrichtung nach einem der vorhergehenden Ansprüche, in welcher die Zwischenkammer zwei Zirkulationskanäle (170a, 170b) mit Zwangsumlauf der Flüssigkeit zwischen dem ersten und dem zweiten seitlichen Becken (15a, 15b) aufweist.

6. Vorrichtung nach einem der Ansprüche 1 bis 4,
- in welcher die Zwischenkammer teilweise mit einer Flüssigkeit (18) auf einer freien Oberfläche gefüllt wird,
- welche eine Zwischenwand (35) zwischen der ersten und der zweiten Turbine in der Zwischenkammer (17) aufweist, so dass sie diese in einen erste und einen zweiter Zirkulationskanal (37a, 37b) für besagte Flüssigkeit zwischen den Turbinen unterteilt, wobei jedes seitliche Becken mit den beiden Kanälen verbunden ist:
- um besagte Flüssigkeit durch einen ersten Durchgang durch die Wand des Beckens im oberen Bereich in das Becken eintreten zu lassen, und
- die besagte Flüssigkeit des Beckens durch einen zweiten Durchgang durch die Beckenwand im unteren Bereich austreten zu lassen.

7. Vorrichtung nach Anspruch 4 alleine genommen oder in Kombination mit einem der Ansprüche 5 und 6, in welcher jede Verbindung zwischen dem entsprechenden oberen Bereich des seitlichen Beckens (15a, 15b) und der Zwischenkammer so positioniert ist, dass die durch die Zwischenkammer (17, 170a, 170b) geführte Flüssigkeit im Wesentlichen tangential in besagtes Seitenbecken eintritt und somit die entsprechende dort angeordnete Turbine (11a, 11b) erreicht.

8. Vorrichtung nach Anspruch 4 alleine genommen oder in Kombination mit einem der Ansprüche 5 bis 7, in welcher die Verbindungen zwischen den unteren Bereichen (152a, 152b) der seitlichen Becken und der Zwischenkammer mit Rückschlagklappen (31a, 31b) versehen sind.

9. Vorrichtung nach Anspruch 4 alleine genommen oder in Kombination mit einem der Ansprüche 5 bis 8, in welcher:
- die oberen und unteren Bereiche (150a, 150b, 152a, 152b) jedes seitlichen Beckens über eine Engstelle (3, 3b) miteinander verbunden sind, welche vorzugsweise eine verformbare Membran aufweist, und/oder:
- die oberen und unteren Bereiche (150a, 150b, 152a, 152b) jedes seitlichen Beckens untereinander im Wesentlichen über eine Engstelle (21a, 21b) miteinander verbunden sind, unter welcher sich ein Diffusor (33, 33b) befindet, der in besagtem unteren Bereich eine seitliche Führungswand des Stroms aufweist mit einer Öffnung, die zu jener Verbindung gerichtet ist, die die Flüssigkeit von diesem unteren Bereich zur Zwischenkammer ableitet.

10. Vorrichtung nach einem der vorhergehenden Ansprüche, in welcher das erste und das zweite seitliche Becken (15a, 15b) durch einen zusätzlicher Kreis (40) für ein gasförmiges Fluid miteinander verbunden sind.

11. Vorrichtung nach Anspruch 4 alleine genommen oder in Kombination mit einem der Ansprüche 5 bis 10, in welcher jede Wand (19), die das entsprechende seitliche Becken nach außen hin abgrenzt, im Wesentlichen spiralförmig um die entsprechende Turbine gewickelt ist.

12. Energieerzeugungsverfahren auf einer Struktur, welche mindestens einer schwenkenden Hin- und Herbewegung von einem ersten Rand zu einem zweiten gegenüberliegenden Rand ausgesetzt ist, **dadurch gekennzeichnet, dass** am Rand der Struktur in mindestens einer in Längsrichtung zentrierten länglichen Zwischenkammer (17, 170a, 170b) eine Flüssigkeit zu einer ersten und einer zweiten Turbine (11a, 11b) fließt, wobei beide in Ruheposition eine vertikale Achse haben, die jeweils in dem ersten und zweiten seitlichen Becken (15a, 15b) zu dem einen oder anderen Rand (7a, 7b) hin ausgerichtet sind, und dadurch, dass sie über die Eintrittskanäle (23a, 23b), die sich im Wesentlichen in der Längsrichtung der Zwischenkammer befinden, versorgt werden.

13. Verfahren nach Anspruch 12, in welchem:
- man jede Turbine in einem oberen Bereich eines der besagten seitlichen Becken (15a, 15b) in Richtung eines der Enden der Zwischenkammer in der Längsrichtung laufen lässt,
- man die in besagtem unteren Bereich befindliche Flüssigkeit über eine Engstelle (21a, 21b) ableitet, welche diesen oberen Bereich von einem unteren Bereich (152a, 152b) des besagten seitlichen Beckens, durch welches man die Flüssigkeit (18) unter der Turbine laufen lässt, trennt, bevor besagte Bewegung der Struktur die Flüssigkeit zu einer anderen Turbine weiterleitet.

14. Verfahren nach Anspruch 12, in welchem:
- man am Eintritt jedes seitlichen Beckens (15a, 15b) die Flüssigkeit in einer Venturivorrichtung (41a, 41b) parallel zu besagter Längsrichtung fließen lässt,
- und man bei einer Bewegung von einem Rand zum anderen die Flüssigkeit in einer ersten Richtung der besagten Längsrichtung durch die Turbinen und anschließend in der Gegenrichtung durch die Venturivorrichtung laufen lässt.

15. Struktur (1), welche um eine horizontale Achse schwenken kann und die Energieerzeugungsvorrichtung (3) nach einem der Ansprüche 1 bis 11 enthält, oder auf welcher elektrische Energie nach dem Verfahren einer der Ansprüche 12 bis 14 erzeugt wird.

## Claims

1. Energy production device on a structure adapted to undergo at least one reciprocating tilting movement from a first edge (7a) to a second opposite edge (7b), with the device comprising:
- at least one first turbine and one second turbine (11a,11b), both positioned at the first and second edges respectively,
- at least one intermediate chamber (17,170a,170b) which is elongated between the first and second turbines,
- a first side tank and a second side tank (15a, 15b) where the first and second turbines are respectively positioned and which communicate with the intermediate chamber(s) to manage liquid inputs and outputs (18), the side tanks each including a wall (19) which delimits them externally and being located towards two ends of the intermediate chamber,
**characterised in that**:
- the first and second turbines have vertical axes (110a, 110b) with the device being considered to be horizontal,
- and the first and second side tanks (15a, 15b) and the first and second turbines are positioned in line with the elongation direction (17a, 17a1, 17b1) of the intermediate chamber, so that the liquid is received in said alignment.

2. Device according to claim 1 wherein, as a separation from the intermediate chamber, the wall (19) of each side tank presents a venturi.

3. Device according to claim 2 wherein the first and second turbines have a one-way rotation direction and blades (45) with opposite sides being concave and convex respectively, facing the flow of said liquid.

4. Device according to claim 1 wherein each side tank comprises:
- an upper section (150a, 150b) wherein one of the first and second turbines, are positioned so that said section receives the liquid in line with the elongation direction (17a, 17a1, 17b1) of the intermediate chamber which supplies it,
- and a lower section (152a, 152b) which communicates with the upper section, with each of the upper and lower sections communicating with the intermediate chamber(s) for the liquid inlets and outlets.

5. Device according to one of the previous claims wherein the intermediate chamber comprises two penstock pipes (170a, 170b) for fluids, between the first and second side tanks (15a, 15b).

6. Device according to one of claims 1 to 4,
- wherein the intermediate chamber is partially filled with a liquid (18) having a free surface,
- and which includes an intermediate partition (35) erected between the first and second turbines, in the intermediate chamber (17), which divides into first and second pipes (37a,37b) for the circulation of said liquid between the turbines, with each side tank communicating with the two pipes:
- for the entry of said liquid into the tank, with a first passage through the tank's wall, in its upper section, and
- for the exit of said liquid from the tank, with a second passage through the tank's wall, in its lower section.

7. Device according to claim 4 alone or in combination with one of claims 5 or 6 wherein each communication between the upper section of the corresponding side tank (15a, 15b) and the intermediate chamber is set such that the liquid channelled by the intermediate chamber (17, 170a, 170b) essentially enters said side tank tangentially and thus reaches the corresponding turbine located there (11a, 11b).

8. Device according to claim 4 alone or in combination with one of claims 5 to 7 wherein communications between the lower sections (152a, 152b) of the side tanks and the intermediate chamber are equipped with non-return valves (31a, 31b).

9. Device according to claim 4 alone or in combination with one of claims 5 to 7, wherein:
- the upper and lower sections (150a, 150b, 152a, 152b) of each side tank communicate with each other using a spout (3, 3b) which preferably includes a deformable diaphragm, and/or:
- the upper and lower sections (150a, 150b, 152a, 152b) of each side tank communicate with each other using a spout (21a, 21b) substantially under which a diffuser is located (33, 33b) which, in said lower section, comprises a flow guiding side wall with an opening directed towards the corresponding liquid outlet communication from said lower section to the intermediate chamber.

10. Device according to one of the previous claims wherein an additional gaseous fluid circuit (40) connects the first and second side tanks (15a, 15b).

11. Device according to claim 4 alone or in combination with one of claims 5 to 10, wherein each wall (19) which externally delimits the corresponding side tank is coiled substantially in a spiral around the corresponding turbine.

12. Energy production process on a structure subject to at least a tilting movement from one edge to the opposite edge, **characterised in that**, on board of the structure, in at least one elongated intermediate chamber (17, 170a, 170b), centred along the elongation direction, liquid is circulated to be brought toward a first turbine and a second turbine (11a, 11b), each of which having a vertical axis when the structure at rest, which are positioned respectively at either edge (7a, 7b), in first and second side tanks (15a, 15b), and which are supplied by inlet channels (23a, 23b) respectively set in line with the elongation direction (17a, 17a1, 17b1) of the intermediate chamber.

13. Process according to claim 12, in which:
- each turbine operates in a lower section of said side tanks (15a, 15b) set towards one of the ends that the intermediate chamber presents according to its elongation direction,
- and, the liquid contained in said upper section is evacuated through a spout (21a, 21b) separating said upper section from a lower section (152a, 152b) of said side tank through which the liquid (18) passes under the turbine before said movement of the structure leads the liquid towards the other turbine.

14. Process according to claim 12, in which:
- at the inlet of each side tank (15a, 15b) the liquid passes through a venturi (41a, 41b), parallel to said elongation direction,
- and, during tilting to one side then the other, the liquid passes through the turbines, in a first direction of said elongation direction then in the opposite direction, through the venturi.

15. Structure (1) able to oscillate around a horizontal axis and comprising the energy production device (3) according to one of claims 1 to 11 or on which electrical energy is produced according to the process according to one of claims 12 to 14.
